(19) Europäisches Patentamt / European Patent Office / Office européen des brevets

(11) **EP 2 302 593 A2**

(12) **EUROPEAN PATENT APPLICATION**
published in accordance with Art. 153(4) EPC

(43) Date of publication:
**30.03.2011 Bulletin 2011/13**

(21) Application number: **09762678.2**

(22) Date of filing: **11.06.2009**

(51) Int Cl.:
***G06T 17/00*** *(2006.01)*

(86) International application number:
**PCT/KR2009/003151**

(87) International publication number:
**WO 2009/151292 (17.12.2009 Gazette 2009/51)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **12.06.2008 KR 20080055309**

(71) Applicant: **Sung, Young Seok**
**Gyeonggi-do 446-914 (KR)**

(72) Inventors:
• **SEONG, Phil Moon**
**Yongin-si**
**Gyeonggi-do 446-911 (KR)**

• **CHOI, Seong Jin**
**Yongin-si**
**Gyeonggi-do 449-040 (KR)**
• **NA, In Chul**
**Seongnam-si**
**Gyeonggi-do 463-904 (KR)**
• **CHOI, Byung Sun**
**Yongin-si**
**Gyeonggi-do 446-903 (KR)**

(74) Representative: **Coyle, Philip Aidan et al**
**FRKelly**
**27 Clyde Road**
**Ballsbridge**
**Dublin 4 (IE)**

(54) **IMAGE CONVERSION METHOD AND APPARATUS**

(57) A method and a device for converting an image are disclosed. According to an embodiment of the present invention, the method for converting a two-dimensional image to a three-dimensional image by an image conversion device can include: receiving and setting overall depth information for an original image; classifying the original image into partial objects and setting three-dimensional information for each of the partial objects; generating a first image by moving the original image by use of the three-dimensional information; receiving and setting a zero point for the original image; generating a second image by moving the original image by use of the zero point; and generating a three-dimensional image by combining the first image and the second image. Accordingly, a still image can be converted to a three-dimensional image.

FIG. 3

200
Image conversion device

310 Setting unit

330 Control unit

320 Generating unit

325 Combining unit

315 Storage unit

EP 2 302 593 A2

**Description**

[Technical Field]

The present invention is related to converting an image, more specifically to a method and device for converting a two-dimensional image to a three-dimensional image.

[Background Art]

Due to horizontal separation of the pair of human eyes, binocular parallax occurs on the retina, and the human brain combines the two images caused by the binocular parallax into one image to recognize the three-dimensionality of an object.

On the contrary, images shown in a photograph, movie or TV are planar images without three-dimensionality because conditions viewed by one of the two human eyes are artificially created into these images by use of a video camera or still camera.

To solve this, a plurality of cameras are conventionally used to acquire a plurality of images for an object, and then these images are combined to generate a three-dimensional image. This, however, is possible only if the object is captured under very specific conditions at the time of capture, and it is practically impossible to convert the object into a three-dimensional image without re-shooting, for example, a previously-shot movie.

[Disclosure]

[Technical Problem]

The present invention provides a method and device for converting a two-dimensional image into a three-dimensional image.

The present invention also provides a method and device for rendering intaglio and relievo in a three-dimensional image by use of zero point.

[Technical Solution]

An aspect of the present invention features a method for converting a two-dimensional image to a three-dimensional image by an image conversion device and a recording medium having recorded a program for executing the method.

According to an embodiment of the present invention, the method for converting a two-dimensional image to a three-dimensional image by an image conversion device can include: receiving and setting overall depth information for an original image; classifying the original image into partial objects and setting three-dimensional information for each of the partial objects; generating a first image by moving the original image by use of the three-dimensional information; receiving and setting a zero point for the original image; generating a second image by moving the original image by use of the zero point; and generating a three-dimensional image by combining the first image and the second image.

The three-dimensional information can include at least one of depth information and contour line information for each of the partial objects, and the contour line information can be area information of partial objects having same depth information.

The zero point can be depth information corresponding to a display plane.

The setting of the three-dimensional information for each of the partial objects can include: setting a center object in the original image; classifying a plurality of partial objects from the center object to surrounding objects and setting depth information for the classified partial objects; and setting contour line information for partial objects of which the depth information is identical.

The setting of the three-dimensional information can include: classifying partial objects at an $n^{th}$ visual point and setting depth information for the classified partial objects; and generating an $n^{th}$ layer in which partial objects corresponding to the depth information set at the $n^{th}$ visual point are to be included. The $n^{th}$ layer can have partial objects, which have the same depth information, arranged therein, and the $n^{th}$ layer can include three-dimensional information for partial objects corresponding to an $(n-1)^{th}$ layer, whereas n is a natural number.

The generating of the first image can be performed by moving the original image in a horizontal direction determined according to three-dimensional information.

In the generating of the first image, partial objects included in the $n^{th}$ layer can be moved in a horizontal direction according to the set depth information, and the depth information can be a difference value from depth information corresponding to the $(n-1)^{th}$ layer.

The generating of the second image can include: computing moving information using the zero point and depth information for the original image; and generating the second image by moving the original image in a horizontal direction determined according to the moving information.

A moving direction of the original image for generating the second image can be different from a moving direction of the original image for generating the first image.

The method can also include, prior to the receiving and setting the depth information for the original image: determining whether the original image is a still image or a two-dimensional video; and if the original image is a two-dimensional video, classifying the two-dimensional video into units of frames and storing the classified frames successively as still images.

The method can also include: if the original image is not a first frame, loading three-dimensional information corresponding to an $(n-1)^{th}$ frame; extracting a modified area by comparing the $(n-1)^{th}$ frame with an $n^{th}$ frame; and correcting three-dimensional information corresponding to the $(n-1)^{th}$ frame in accordance with the modified area. The $n^{th}$ frame can correspond to a still image to be converted at a current visual point, and the $(n-1)^{th}$ frame can correspond to a still image converted at a previous visual point that is adjacent to the $n^{th}$ frame, whereas n is a natural number.

According to another embodiment of the present invention, the recording medium tangibly embodies a program of instructions readable and executable by a digital processing apparatus to execute the method for converting a two-dimensional image to a three-dimensional image, and the program can execute: receiving and setting overall depth information for an original image; classifying the original image into partial objects and setting three-dimensional information for each of the partial objects; generating a first image by moving the original image by use of the three-dimensional information; receiving and setting a zero point for the original image; generating a second image by moving the original image by use of the zero point; and generating a three-dimensional image by combining the first image and the second image.

Another aspect of the present invention features a device for converting a two-dimensional image to a three-dimensional image.

According to an embodiment of the present invention, the device for converting a two-dimensional image to a three-dimensional image can include: a control unit configured to receive and set overall depth information and zero point for an original image; a setting unit configured to classify the original image into partial objects and set three-dimensional information for each of the partial objects; a generating unit configured to generate a first image by moving the original image by use of the three-dimensional information and generate a second image by moving the original image by use of the zero point; and a combining unit configured to generate a three-dimensional image by combining the first image and the second image.

The setting unit can be configured to set a center object in the original image, to classify a plurality of partial objects from the center object to surrounding objects, to set depth information for the classified partial objects, and to set contour line information for partial objects of which the depth information is identical.

The setting unit can be configured to classify partial objects at an $n^{th}$ visual point, to set depth information for the classified partial objects, and to generate an $n^{th}$ layer in which partial objects corresponding to the depth information set at the $n^{th}$ visual point are to be included. The $n^{th}$ layer can have partial objects, which have the same depth information, arranged therein, and the $n^{th}$ layer can include three-dimensional information for partial objects corresponding to an $(n-1)^{th}$ layer, whereas n is a natural number.

The generating unit can be configured to generate the first image by moving the original image in a horizontal direction determined according to three-dimensional information.

The generating unit can be configured to move partial objects included in the $n^{th}$ layer in a horizontal direction according to the set depth information, and the depth information can be a difference value from depth information corresponding to the $(n-1)^{th}$ layer.

The generating unit can be configured to compute moving information using the zero point and depth information for the original image and to generate the second image by moving the original image in a horizontal direction determined according to the moving information.

Prior to receiving and setting the depth information and the zero point for the original image, the control unit can be configured to determine whether the original image is a still image or a two-dimensional video, and, if the original image is a two-dimensional video, to classify the two-dimensional video into units of frames and store the classified frames successively as still images.

If the original image is not a first frame, the setting unit can be configured to load three-dimensional information corresponding to an $(n-1)^{th}$ frame, to extract a modified area by comparing the $(n-1)^{th}$ frame with an $n^{th}$ frame, and to correct three-dimensional information corresponding to the $(n-1)^{th}$ frame in accordance with the modified area. The $n^{th}$ frame can correspond to a still image to be converted at a current visual point, and the $(n-1)^{th}$ frame can correspond to a still image converted at a previous visual point that is adjacent to the $n^{th}$ frame, whereas n is a natural number.

[Advantageous Effects]

With the method and device for converting an image in accordance with the present invention, a two-dimensional image can be converted into a three-dimensional image.

Moreover, with the present invention, intaglio and relieve can be rendered in a three-dimensional image by use of zero point.

[Mode for Invention]

Since there can be a variety of permutations and embodiments of the present invention, certain embodiments will be illustrated and described with reference to the accompanying drawings. This, however, is by no means to restrict the present invention to certain embodiments, and shall be construed as including all permutations, equivalents and substitutes covered by the ideas and scope of the present invention. Throughout the description of the present invention, when describing a certain technology is determined to evade the point of the present invention, the pertinent detailed description will be omitted.

Terms such as "first" and "second" can be used in describing various elements, but the above elements shall not be restricted to the above terms. The above terms are used only to distinguish one element from the other.

The terms used in the description are intended to describe certain embodiments only, and shall by no means restrict the present invention. Unless clearly used otherwise, expressions in a singular form include a meaning of a plural form. In the present description, an expression such as "comprising" or "including" is intended to designate a characteristic, a number, a step, an operation, an element, a part or combinations thereof, and shall not be construed to preclude any presence or possibility of one or more other characteristics, numbers, steps, operations, elements, parts or combinations thereof.

Hereinafter, some embodiments will be described in detail with reference to the accompanying drawings.

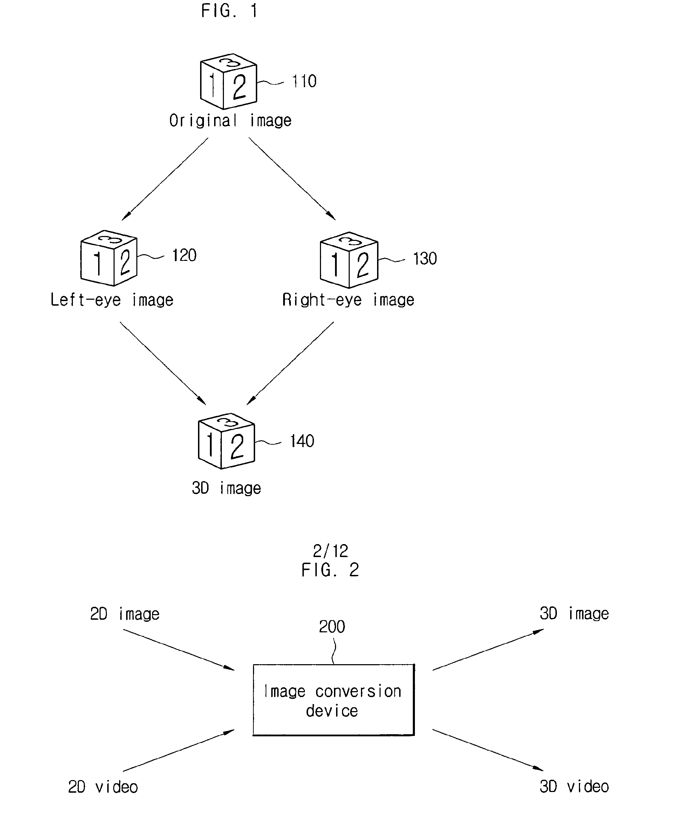

FIG. 1 illustrates the principle of a three-dimensional image in accordance with an embodiment of the present invention.

A plurality of parallactic images are needed in order to realize a two-dimensional image to a three-dimensional image. For a previously-photographed two-dimensional image, as shown in FIG. 1, an original image 110 is used to generate images that are parallactic to the original image 110. For example, a first image (i.e. a left-eye image 120) and a second image (i.e. a right-eye image 130) can be generated using the original image 110.

Although it is described that the first image and the second image, which are parallactic to each other, are generated from the original image 110 for the purpose of description and understanding of the principle of human cognition of an object, it is also possible to generate one image that is parallactic to the original image 110 and to generate a three-dimensional image by combining the original image 110 with the generated image.

A human obtains a two-dimensional image of an object through each eye. Then, the human brain combines the two-dimensional images obtained through either eye to cognize the three-dimensionality of the object. An image in which a plurality of parallactic images generated from the original image are combined using this principle is called a "stereoscopic image." In the present specification, the stereoscopic image will be referred to as a three-dimensional image.

For example, the left-eye image 120 and the right-eye image 130 shown in FIG. 1 can be combined according to a predetermined method to generate a three-dimensional image. The three-dimensional image can be generated by combining a plurality of parallactic still images, as shown in FIG. 1, to provide three-dimensionality by use of specially-made equipment.

The present specification will describe a method of converting two-dimensional video images to three-dimensional video images and a method of converting a still image to a three-dimensional image.

FIG. 2 illustrates image conversion in accordance with an embodiment of the present invention.

As illustrated in FIG. 2, an image conversion device 200 is inputted with a two-dimensional image (i.e. a still image) and two-dimensional video images.

The image conversion device 200 separates the inputted two-dimensional image and two-dimensional video images into a plurality of partial objects and then converts the two-dimensional image and two-dimensional video images to and outputs a three-dimensional image and three-dimensional video images by setting three-dimensional information for each of the partial objects.

Here, in case the inputted original image is two-dimensional video, the image conversion device 200 classifies first the two-dimensional video images into individual units of frames, and successively stores each of the frames as two-dimensional images. Then, the image conversion device 200 can classify each of the two-dimensional images corresponding to the two-dimensional video into a plurality of partial objects, set three-dimensional information for the partial objects, and then convert the two-dimensional images to three-dimensional images. Moreover, it shall be apparent that the image conversion device 200 can further combine the generated three-dimensional images to convert the three-dimensional images to three-dimensional video images.

The image conversion device 200 in accordance with the present invention can set a zero point corresponding to a two-dimensional image and convert the two-dimensional image to a three-dimensional image using the zero point. Here, the converted three-dimensional image can include both intaglio and relievo.

In this specification, zero point is defined as three-dimensional information placed on a display plane that is neither intaglio nor relievo in a three-dimensional image or three-dimensional video image. That is, partial objects corresponding to the zero point are placed on the display plane. In other words, each partial object can be expressed as intaglio or relievo with respect to the zero point based on the set three-dimensional information.

The method by which the image conversion device 200 converts a two-dimensional image or two-dimensional video image to a three-dimensional image or three-dimensional video images will be described below in detail with reference to relevant drawings.

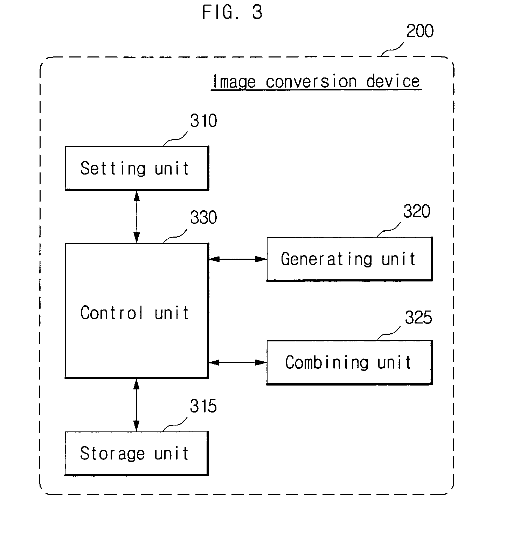

FIG. 3 is a block diagram illustrating the functional structure inside an image conversion device in accordance with an embodiment of the present invention.

Referring to FIG. 3, the image conversion device 200 in accordance with the present invention includes a setting unit 310, a storage unit 315, a generating unit 320, a combining unit 325 and a control unit 330.

The setting unit 310 classifies a two-dimensional image into a center object and partial objects according to the control of the control unit 330 and sets depth information for each partial object. Then, the setting unit 310 sets contour line information for areas of partial objects of which the depth information is the same.

In this specification, the contour line information is defined as an area of partial objects of which the depth information is identical.

In this specification, the depth information and contour line information of a partial object will be collectively referred to as three-dimensional information. In other words, the three-dimensional information includes the contour line information for areas of partial objects having identical depth information and/or the depth information corresponding to the contour line information.

Moreover, the partial object will be defined as areas having $n^{th}$ depth information at an $n^{th}$ visual point in the original image. Therefore, the partial objects classified at an $n^{th}$ visual point are set in an area in which partial objects classified up to an $(n-1)^{th}$ visual point are excluded.

Furthermore, the setting unit 310 can arrange and output three-dimensional information for partial objects having identical depth information by use of a layer.

For example, in an $n^{th}$ layer generated at an $n^{th}$ visual point, partial objects classified at the $n^{th}$ visual point can be arranged and outputted by use of one-dimensional arrangement. Moreover, the $n^{th}$ layer can include depth information for partial objects included in the $n^{th}$ layer. Here, each layer has a hierarchical connection structure. That is, with respect to the depth information of the partial objects included in the $n^{th}$ layer, a value summing the depth information up to an $(n-1)^{th}$ layer can be the depth information of the final $n^{th}$ layer.

In other words, the depth information of any layer can be a difference value from the depth information of an adjacent upper level layer. Of course, it shall be apparent that the depth information of partial objects can be included in each layer, depending on the way of implementation.

The present specification will mainly describe converting a two-dimensional video to a three-dimensional video. Of course, the image conversion device 200 according to the present invention can convert a two-dimensional image to a three-dimensional image. This, however, can be done through the same process as converting a two-dimensional video to a three-dimensional video.

Stored in the storage unit 315 are software for operating the image conversion device 200 of the present invention and a plurality of two-dimensional images, two-dimensional videos, converted three-dimensional images, converted three-dimensional videos and temporary parallactic images generated during the conversion.

The generating unit 320 carries out the function of generating a first image and a second image by use of three-dimensional information and/or zero point in accordance with the control of the control unit 330.

For example, the generating unit 320 generates the first image by moving a two-dimensional image in a predetermined direction (to the left or to the right) using the three-dimensional information set by the setting unit 310. The generating unit 320 can also generate the second image by moving the two-dimensional image in a predetermined direction using the zero point in accordance with the control of the control unit 330. Here, the moving direction of the two-dimensional image for generating the second image can be an opposite direction from the moving direction of the two-dimensional image for generating the first image.

For example, if it is assumed that the generating unit 320 generated the first image by moving the two-dimensional image to the left according to the three-dimensional information, the generating unit 320 can generate the second image by moving the two-dimensional image to the right in accordance with the zero point.

The generating unit 320 can receive the zero point from the control unit 330. Then, the generating unit 320 can generate moving information using the received zero point and the overall depth information set for the two-dimensional image.

Then, the generating unit 320 can use the moving information to move the two-dimensional image in a predetermined direction and generate the second image.

Although the moving information is generated by the generating unit 320 in the present specification, it is also possible that the moving information is computed by a control unit and inputted to the generating unit 320.

The combining unit 325 performs the function of generating a three-dimensional image by combining the first image and the second image generated by the generating unit 320.

As such, by generating the first image by moving the two-dimensional image in a first direction according to the three-dimensional information, generating the second image by moving the two-dimensional image in a second direction in correspondence with the zero point (i.e. according to the moving information), and combining the first image and the second image, a three-dimensional image including both intaglio and relievo can be ultimately generated.

As zero point is depth information located on the planar surface of display, the depth information of partial objects corresponding to the zero point in the generated three-dimensional image is located on the display plane, and thus the depth information can be expressed as a base value (e.g. 0).

Therefore, by combining the first image, in which partial objects are moved according to the depth information corresponding to each partial object, and the second image, in which the two-dimensional image is moved according to the zero point, the partial objects can be ultimately expressed as intaglio and relievo about the set zero point.

The control unit 330 controls the internal components (e.g., the setting unit 310, the storage unit 315, the generating unit 320, the combining unit 325, etc.) of the image conversion device 200 of the present invention. In addition, the control unit 330 can receive from the outside and set the overall depth information for the two-dimensional image.

Moreover, the control unit 330 can determine whether the inputted original image is a two-dimensional image or a three-dimensional image and then, if the original image is a two-dimensional image, can classify the two-dimensional image into units of frames and store the frames as successive two-dimensional images.

If the original image is a two-dimensional video, the control unit 330 can combine three-dimensional images, to which the frames of the two-dimensional video are converted, to generate a three-dimensional video.

The control unit 330 can also receive the zero point from the outside to compute the moving information for the corresponding two-dimensional image and output the moving information to the generating unit 320.

Although not illustrated in FIG. 3, the image conversion device 200 in accordance with the present invention can also include a compensation unit (not shown) for compensating the converted three-dimensional image or three-dimensional video. The compensation unit can carry out the function of compensating the three-dimensional image or three-dimensional video according to the control of the control unit 330.

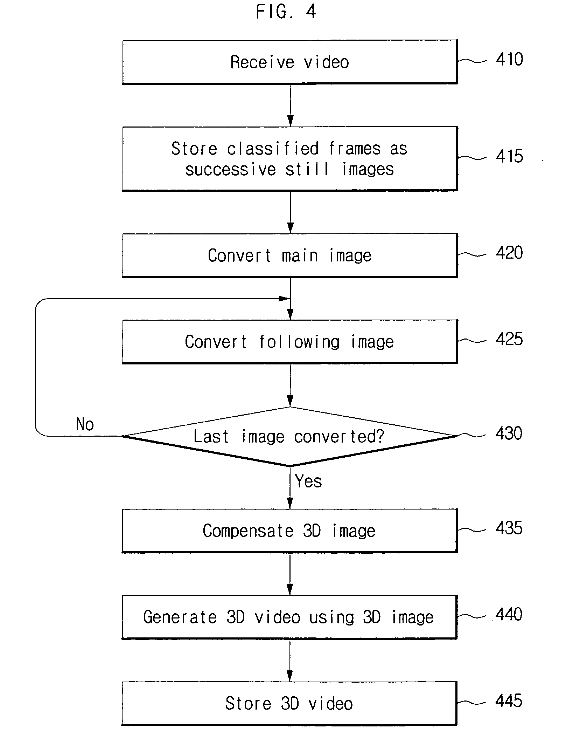

FIG. 4 is a flow diagram showing a method of converting a two-dimensional video to a there-dimensional video in accordance with an embodiment of the present invention. Hereinafter, a method of converting a two-dimensional video to a there-dimensional video will be described. Although each of the steps described below is carried out by individual internal components of the image conversion device 200, the individual internal components will be collectively referred to as the image conversion device 200 for the convenience of description and understanding.

In the step 410, the image conversion device 200 is inputted with a two-dimensional video.

Here, the image conversion device 200 can carry out the step of determining whether the inputted original image is a two-dimensional video or a two-dimensional image. Although this step is skipped since the present invention assumes that a two-dimensional video is inputted, it is possible to carry out the step of determining whether the inputted original image is a two-dimensional video or a two-dimensional image, and if the inputted original image is a two-dimensional video, the step 415 can be carried out.

In the step 415, the image conversion device 200 classified the two-dimensional video into units of frames. The, the image conversion device 200 converts the classified frames to successive two-dimensional images and stores the successive two-dimensional images.

A two-dimensional video is typically stored in units of frames. Therefore, the image conversion device 200 can classify the two-dimensional video into units of frames and then convert and store the two-dimensional video as successive two-dimensional images.

In the step 420, the image conversion device 200 converts a first two-dimensional image corresponding to a first frame to a three-dimensional image.

For example, the image conversion device 200 classifies a center object of the first two-dimensional image into partial objects and sets the depth information for the partial objects. Then, the image conversion device 200 sets areas of the partial objects corresponding to the depth information as contour line information. Moreover, the image conversion device 200 can classify the partial objects for the remaining portions excluding the set contour line information and generate the depth information to set the next contour line information. This contour line information can be successively set hierarchically. As such, the image conversion device 200 can classify the partial objects from the center object to surrounding objects to set the three-dimensional information.

In the present specification, the three-dimensional information can include the depth information and/or the contour line information. Moreover, the contour line information is defined as curved line information connecting areas having the same depth information in a two-dimensional image. Therefore, the contour line information can be expressed as area information corresponding to certain depth information.

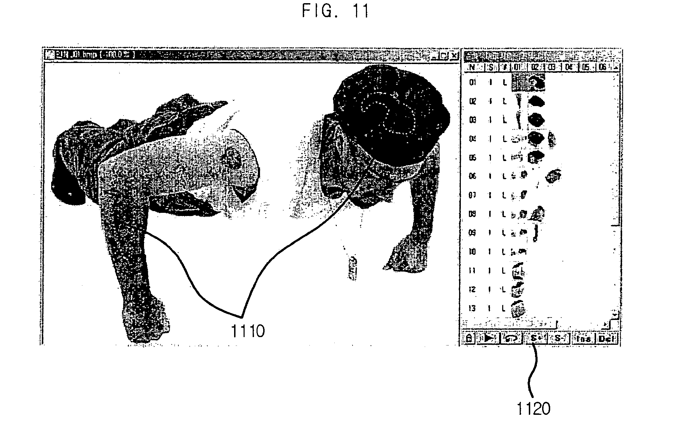

Classifying partial objects from the center object to surrounding objects and setting the three-dimensional information will be described below in more detail with reference to FIG. 11.

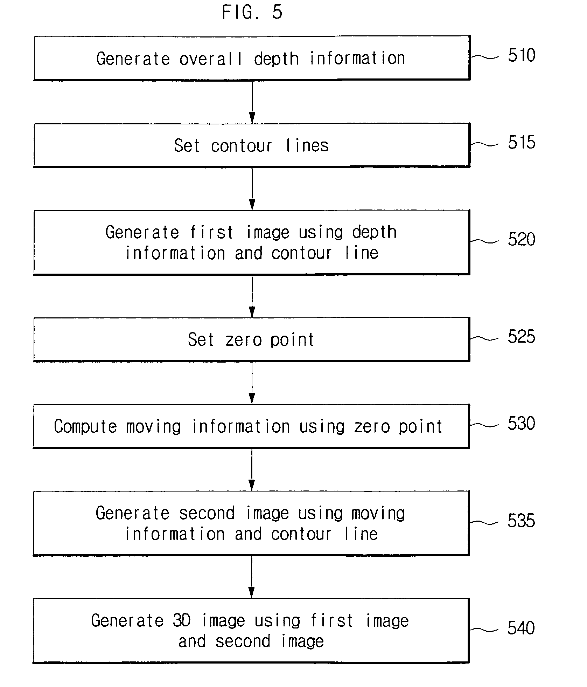

Moreover, converting a two-dimensional image to a three-dimensional image will be described below in more detail with reference to FIG. 5.

In the step 425, the image conversion device 200 converts a two-dimensional image following the first frame to a three-dimensional image.

For example, for a frame that is not the first frame in a two-dimensional video, the image conversion device 200 loads three-dimensional information that is set in correspondence with an $(n-1)^{th}$ two-dimensional image corresponding to an adjacent preceding frame, n being a natural number. Then, the image conversion device 200 compares the $(n-1)^{th}$ two-dimensional image with an $n^{th}$ two-dimensional image to extract changed objects. Then, the image conversion device 200 modifies the three-dimensional information in accordance with the changed objects to set the three-dimensional information for the $n^{th}$ two-dimensional image.

As such, for a two-dimensional video, the image conversion device 200 can load three-dimensional information corresponding to an adjacent preceding frame and generate three-dimensional information for the $n^{th}$ two-dimensional image. Accordingly, by using the three-dimensional information corresponding to the preceding frame, the time required for setting three-dimensional information can be reduced.

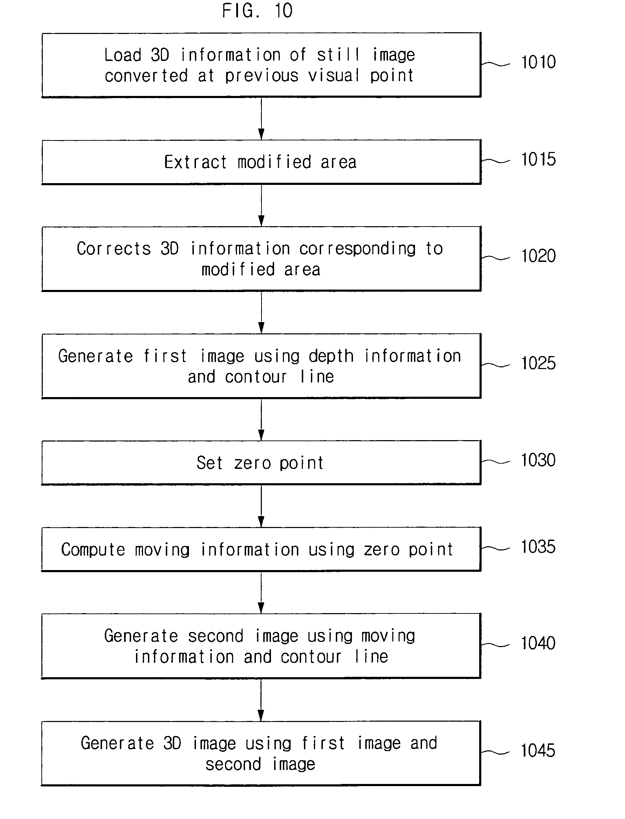

For a frame that is not the first frame, converting a two-dimensional image to a three-dimensional image will be described below in more detail with reference to FIG. 10.

In the step 430, the image conversion device 200 determines whether all of the frames of the two-dimensional video are converted to three-dimensional images.

For example, the image conversion device 200 can determine whether all of the frames of the two-dimensional video are converted to three-dimensional images by determining whether the last frame of the two-dimensional video is converted to a three-dimensional image.

If it is determined that not all of the frames are converted to three-dimensional images, the step 425 is performed.

However, if it is determined that all of the frames are converted to three-dimensional images, the step 435 is performed so that the image conversion device 200 can compensate and retouch a plurality of converted three-dimensional images.

The image conversion device 200 classifies a two-dimensional image into partial objects and sets different depth information for individual partial objects, and moves the partial objects using the depth information. In these processes, individual partial objects may be damaged. The damaged partial objects may appear as if the image is dragged during the process of combining. Therefore, the image conversion device 200 can compensate and retouch the damaged partial objects for a satisfactory restoration of a three-dimensional image.

In the step 440, the image conversion device 200 generates a three-dimensional video using the compensated three-dimensional images. Here, the image conversion device 200 can check for three-dimensionality of the two-dimensional image and connectivity between three-dimensional images corresponding to adjacent frames.

In the step 445, the image conversion device 200 stores the three-dimensional video.

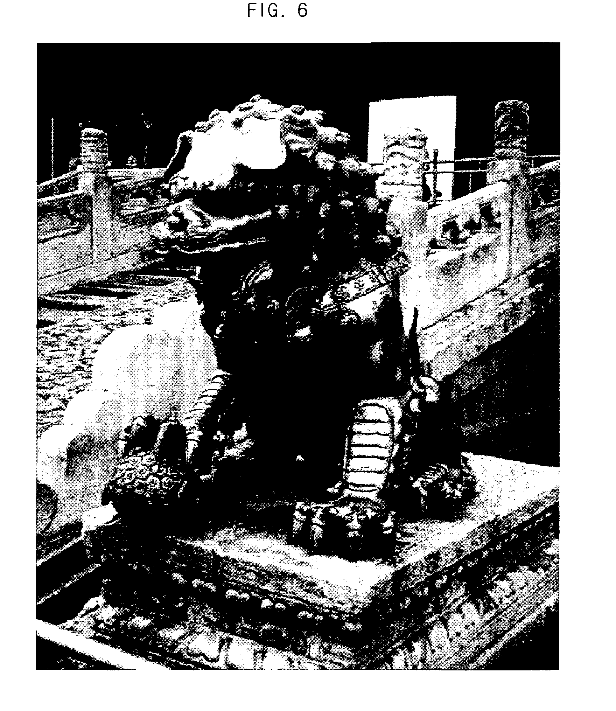

FIG. 5 is a flow diagram illustrating a method of converting a two-dimensional image to a three-dimensional image in accordance with an embodiment of the present invention, and FIG. 6 to FIG. 9 show images generated according to an embodiment of the present invention. Hereinafter, the detailed method of converting an individual two-dimensional image to a corresponding three-dimensional image will be described. Hereinafter, a specific embodiment of the step 420 or 425 will be described. Although each of the steps described below is carried out by individual internal components of the image conversion device 200, the individual internal components will be collectively referred to as the image conversion device 200 for the convenience of description and understanding.

Also, it will be assumed that the two-dimensional image to be converted is already loaded, and the steps after that will be described.

In the step 510, the image conversion device 200 sets overall depth information of the two-dimensional image.

In one example, an operator can define the overall three-dimensionality of the two-dimensional image. That is, the image conversion device 200 can configure the overall depth information and the number of contour lines by receiving the overall depth information of the two-dimensional image and the number of contour lines that can be arranged corresponding to the same depth information from the outside.

In the step 515, the image conversion device 200 classifies the two-dimensional image into partial objects and receives and configures the depth information and contour lines corresponding to the partial objects.

For example, the image conversion device 200 sets a center object and classifies the center object into partial objects. Then, the image conversion device 200 sets the depth information for the classified partial objects. Also, the image conversion device 200 sets areas of the partial objects corresponding to the same depth information as contour line information. As such, the image conversion device 200 can classify the partial objects from the center object to surrounding objects to set the three-dimensional information.

The three-dimensional information set for the two-dimensional image can be set hierarchically. For example, it is possible that, once first three-dimensional information for a first partial object that is set at a first visual point is set, the three-dimensional information corresponding to a second partial object that is set at a second visual point can include the first three-dimensional information for the first partial object.

If the depth information corresponding to the first partial object is 1, the depth information of partial objects newly set in the second partial objects can be a value in which the depth information of the first partial object and the depth information of the pertinent second partial object are added.

In other words, the depth information corresponding to each individual partial object can be difference information from the depth information of a partial object set at a preceding visual point, and can be freely set by the operator. Moreover, the second partial object can include contour line information of the first partial object.

In the step 520, the image conversion device 200 generates a first image by moving each of the partial objects in a predetermined direction (e.g., in a horizontal direction) by use of the three-dimensional information set according to the two-dimensional image.

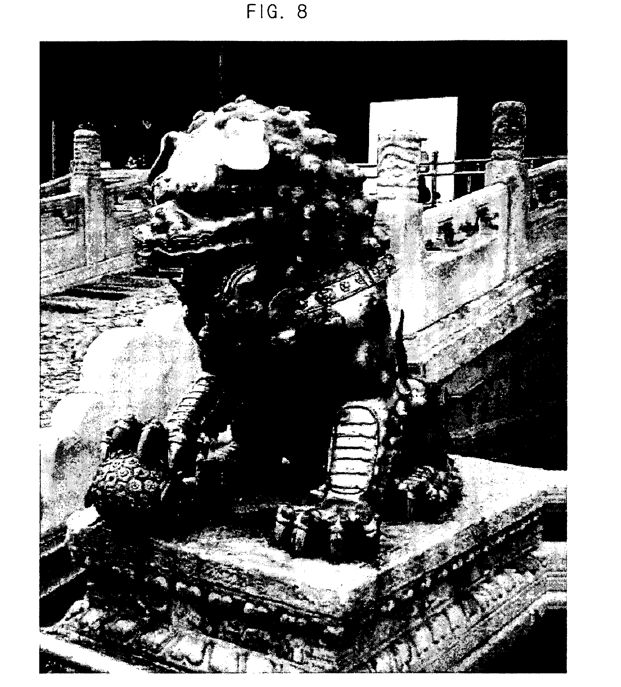

For example, the image conversion device 200 can generate the first image by moving each of the partial object in a horizontal direction by use of the depth information set for each of the partial objects of the two-dimensional image. Such first image is illustrated in FIG. 8.

In the step 525, the image conversion device 200 sets a zero point for the two-dimensional image.

For example, the image conversion device 200 can receive a zero point for the two-dimensional image from the outside and set the zero point.

As described earlier, zero point refers to the depth information placed on a display plane when a three-dimensional image is rendered. Therefore, the depth information set as the zero point is set as "0" when the three-dimensional image is rendered.

In the step 530, the image conversion device 200 computes moving information using the set zero point and overall depth information.

For example, the image conversion device 200 can generate the moving information by use of the following mathematical expression 1.

【Mathematical Expression 1】

$$\text{Moving information} = \text{Overall depth information} - \text{Zero point}$$

For example, if the overall depth information is 50 and the zero point is 10, the moving information can be computed to be 40. As such, by setting the zero point, computing the moving information and moving the two-dimensional image using the moving information, a second image can be generated, and by combining the second image with the first image, a three-dimensional image, encompassing both intaglio and relievo with respect to the zero point, can be ultimately generated.

Moreover, by using the zero point in accordance with the present invention, both intaglio and relievo can be rendered in a three-dimensional image without a complicated process of computing. Furthermore, the three-dimensional image based on the intaglio and relievo can be easily modified by simply changing the zero point.

In the step 535, the image conversion device 200 generates the second image by moving the two-dimensional image in a predetermined direction by use of the computed moving information. The second image is an image in which the partial objects are moved by use of the moving information.

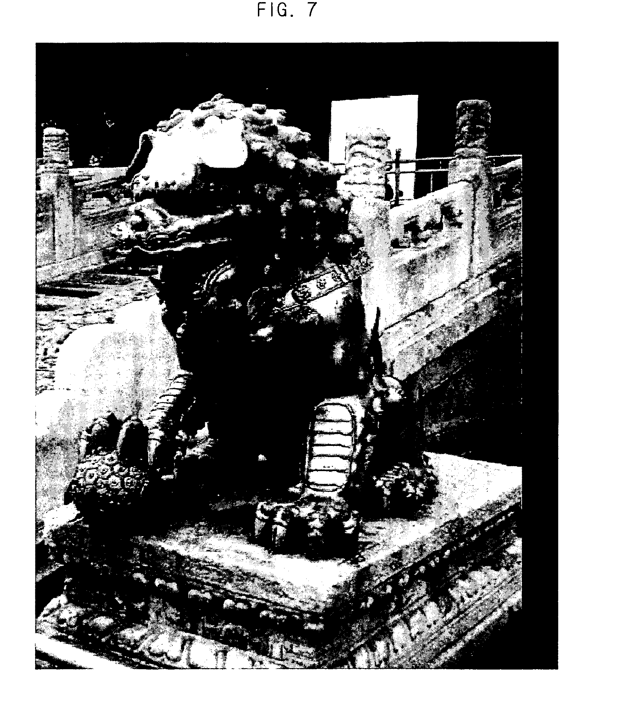

FIG. 6 is the two-dimensional image (i.e. the original image), and FIG. 7 is the second image that is moved according to the moving information. Comparing FIG. 6 and FIG. 7, it can be inferred that FIG. 7 is moved by as much as the moving information.

In the step 540, the image conversion device 200 generates a three-dimensional image by combining the first image with the second image.

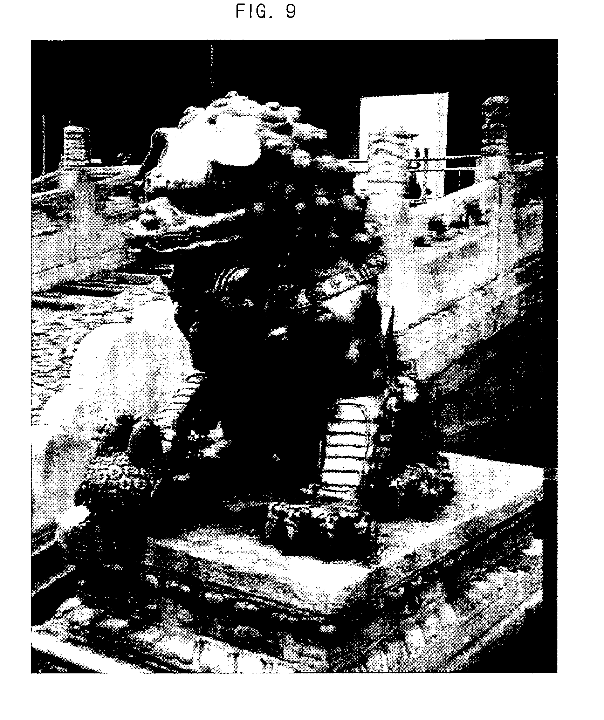

The three-dimensional image generated by combining the first image and the second image includes both intaglio and relievo. Illustrated in FIG. 9 is the three-dimensional image in which the first image (e.g. FIG. 8) and the second image (e.g. FIG. 7) are combined. The three-dimensional image illustrated in FIG. 9 can be stereoscopically viewed by use of red-blue glasses. Although it is described for the convenience of description and understanding that the three-dimensional image can be viewed stereoscopically by use of the red-blue glasses, it shall be appreciated that the three-dimensional image can be viewed stereoscopically by use of other equipment than the red-blue glasses.

FIG. 10 is a flow diagram showing a method of converting a two-dimensional image to a three-dimensional image in accordance with another embodiment of the present invention. The below description assumes that a three-dimensional image corresponding to the first frame of a two-dimensional video is generated, and a method for converting following frames to three-dimensional images will be described. Although each of the steps described below is carried out by individual internal components of the image conversion device 200, the individual internal components will be collectively referred to as the image conversion device 200 for the convenience of description and understanding. Hereinafter, it will be assumed that a two-dimensional image corresponding to a frame to be currently converted is already loaded.

In the step 1010, the image conversion device 200 loads three-dimensional information (i.e. depth information, contour line information) corresponding to the three-dimensional image corresponding to the frame that is already converted at a previous visual point.

In the step 1015, the image conversion device 200 corrects three-dimensional information for an object modified in correspondence with an (n-1)$^{th}$ two-dimensional image. Here, it will be assumed that the value set when a two-dimensional image corresponding to a first frame is modified is set as an initial value and is later used as the zero point in following frames.

For example, when the (n-1)$^{th}$ two-dimensional image modified at a previous visual point and an n$^{th}$ two-dimensional image, which is to be modified at a current visual point, are compared, there can be objects that are added, deleted, moved and changed in shape. Therefore, the image conversion device 200 generates three-dimensional information corresponding to the n$^{th}$ two-dimensional image by correcting the loaded three-dimensional information.

For example, if an object is moved along the Z-axis compared to the previous visual point, the image conversion device 200 changes the depth information for the object. If an object is moved along the X-axis or Y-axis compared to the previous visual point, the image conversion device 200 can change the contour lines for the object. If an object is added, the image conversion device 200 can set the depth information for the added object and set the contour lines for the object. If an object is deleted, the image conversion device 200 can delete the three-dimensional information for the object.

Since following steps are identical to the steps from 520 onward, redundant description will be omitted.

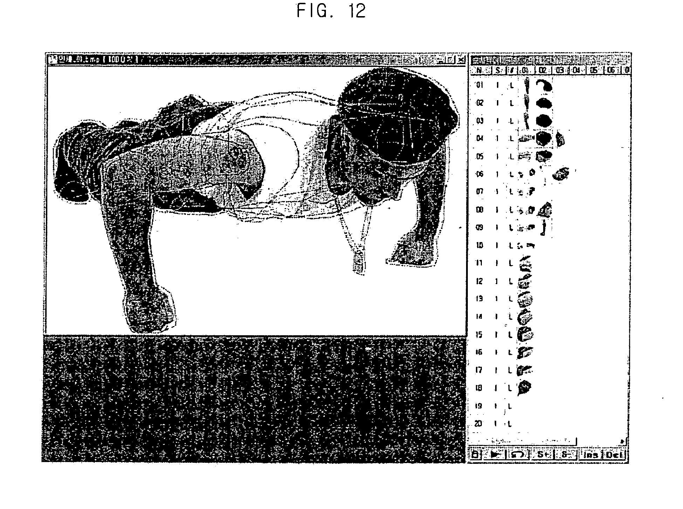

FIG. 11 and FIG. 12 illustrate screen shots provided by the image conversion device in accordance with an embodiment of the present invention.

As illustrated in FIG. 11 and FIG. 12, depth information and contour lines are received and set from a center object for a two-dimensional image. Here, as shown with reference numeral 1110 in FIG. 11, partial objects corresponding to the same depth information are set to be included in contour lines that have the same level. Also, as shown with reference numeral 1110, when provided in the form of software, the concept of layer is used to include the partial objects having the same depth information in the same layer. Moreover, it is possible to set the contour line information hierarchically from the center object of the two-dimensional image.

Each layer can include the depth information of the pertinent layer. Moreover, each layer can be outputted by having a plurality of partial objects, of which the depth information is the same, arranged in groups.

Through this, the user can be allowed to easily recognize the partial objects included in each layer.

Moreover, the three-dimensional information for the partial objects can be classified in a hierarchical form based on the same depth information.

For example, partial objects corresponding to first depth information about the center object are classified, and these partial objects are arranged in a horizontal direction, as shown with reference numeral 1120, and then the pertinent partial objects are connected to set the contour line.

Partial objects corresponding to second depth information are classified in areas excluding the partial objects corresponding to the first depth information, and their three-dimensional information is set. Here, the second depth information can be a difference value from the first depth information.

Therefore, it can be inferred that the depth information of any of the partial objects set lastly is a value summing the depth information of all partial objects set previously.

It shall be appreciated that instructions for performing the method of converting a two-dimensional image to a three-dimensional image described above can be embodied in the form of a program or software.

Although certain embodiments of the present invention have been described, it shall be appreciated by anyone ordinarily skilled in the art to which the present invention pertains that there can be a variety of permutations and modifications of the present invention without departing from the technical ideas and scopes of the present invention that are disclosed in the claims appended below.

[Description of Drawings]

FIG. 1 illustrates the principle of a three-dimensional image in accordance with an embodiment of the present invention.

FIG. 2 illustrates image conversion in accordance with an embodiment of the present invention.

FIG. 3 is a block diagram illustrating the functional structure inside an image conversion device in accordance with an embodiment of the present invention.

FIG. 4 is a flow diagram showing a method of converting a two-dimensional video to a there-dimensional video in accordance with an embodiment of the present invention.

FIG. 5 is a flow diagram illustrating a method of converting a two-dimensional image to a three-dimensional image in accordance with an embodiment of the present invention.

FIG. 6 to FIG. 9 show images generated according to an embodiment of the present invention.

FIG. 10 is a flow diagram showing a method of converting a two-dimensional image to a three-dimensional image in accordance with another embodiment of the present invention.

FIG. 11 and FIG. 12 illustrate screen shots provided by the image conversion device in accordance with an embodiment of the present invention.

## Claims

1. A method for converting a two-dimensional image to a three-dimensional image, the two-dimensional image being converted to the three-dimensional image by an image conversion device, the method comprising:

   receiving and setting overall depth information for an original image;
   classifying the original image into partial objects and setting three-dimensional information for each of the partial objects;
   generating a first image by moving the original image by use of the three-dimensional information;
   receiving and setting a zero point for the original image;
   generating a second image by moving the original image by use of the zero point; and
   generating a three-dimensional image by combining the first image and the second image.

2. The method of claim 1, wherein the three-dimensional information includes at least one of depth information and contour line information for each of the partial objects, and
   the contour line information is area information of partial objects having same depth information.

3. The method of claim 1, wherein the zero point is depth information corresponding to a display plane.

4. The method of claim 2, wherein the setting of the three-dimensional information for each of the partial objects comprises:

   setting a center object in the original image;
   classifying a plurality of partial objects from the center object to surrounding objects and setting depth information for the classified partial objects; and
   setting contour line information for partial objects of which the depth information is identical.

5. The method of claim 4, wherein the setting of the three-dimensional information comprises:

   classifying partial objects at an $n^{th}$ visual point and setting depth information for the classified partial objects; and
   generating an $n^{th}$ layer in which partial objects corresponding to the depth information set at the $n^{th}$ visual point are to be included,
   wherein the $n^{th}$ layer has partial objects arranged therein, the partial objects having the same depth information, and
   wherein the $n^{th}$ layer includes three-dimensional information for partial objects corresponding to an $(n-1)^{th}$ layer, n being a natural number.

6. The method of claim 1, wherein the generating of the first image is performed by moving the original image in a horizontal direction determined according to three-dimensional information.

7. The method of claim 5, wherein in the generating of the first image, partial objects included in the $n^{th}$ layer are moved in a horizontal direction according to the set depth information, and
   wherein the depth information is a difference value from depth information corresponding to the $(n-1)^{th}$ layer.

8. The method of claim 1, wherein the generating of the second image comprises:

   computing moving information using the zero point and depth information for the original image; and
   generating the second image by moving the original image in a horizontal direction determined according to the moving information.

9. The method of claim 8, wherein a moving direction of the original image for generating the second image is different from a moving direction of the original image for generating the first image.

10. The method of claim 1, further comprising, prior to the receiving and setting the depth information for the original image:

    determining whether the original image is a still image or a two-dimensional video; and
    if the original image is a two-dimensional video, classifying the two-dimensional video into units of frames and storing the classified frames successively as still images.

11. The method of claim 10, further comprising:

    if the original image is not a first frame, loading three-dimensional information corresponding to an $(n-1)^{th}$ frame;
    extracting a modified area by comparing the $(n-1)^{th}$ frame with an $n^{th}$ frame; and
    correcting three-dimensional information corresponding to the $(n-1)^{th}$ frame in accordance with the modified area, wherein the $n^{th}$ frame corresponds to a still image to be converted at a current visual point, and the $(n-1)^{th}$ frame corresponds to a still image converted at a previous visual point that is adjacent to the $n^{th}$ frame, n being a natural number.

12. A device for converting a two-dimensional image to a three-dimensional image, comprising:

    a control unit configured to receive and set overall depth information and zero point for an original image;
    a setting unit configured to classify the original image into partial objects and set three-dimensional information for each of the partial objects;
    a generating unit configured to generate a first image by moving the original image by use of the three-dimensional information and generate a second image by moving the original image by use of the zero point; and
    a combining unit configured to generate a three-dimensional image by combining the first image and the second image.

13. The device of claim 12, wherein the three-dimensional information includes at least one of depth information and contour line information for each of the partial objects, and
    the contour line information is area information of partial objects having same depth information.

14. The device of claim 12, wherein the zero point is depth information corresponding to a display plane.

15. The device of claim 13, wherein the setting unit is configured to set a center object in the original image, to classify a plurality of partial objects from the center object to surrounding objects, to set depth information for the classified partial objects, and to set contour line information for partial objects of which the depth information is identical.

16. The device of claim 15, wherein the setting unit is configured to classify partial objects at an $n^{th}$ visual point, to set depth information for the classified partial objects, and to generate an $n^{th}$ layer in which partial objects corresponding to the depth information set at the $n^{th}$ visual point are to be included,
    wherein the $n^{th}$ layer has partial objects arranged therein, the partial objects having the same depth information, and
    wherein the $n^{th}$ layer includes three-dimensional information for partial objects corresponding to an $(n-1)^{th}$ layer, n being a natural number.

17. The device of claim 12, wherein the generating unit is configured to generate the first image by moving the original image in a horizontal direction determined according to three-dimensional information.

18. The device of claim 16, wherein the generating unit is configured to move partial objects included in the $n^{th}$ layer in a horizontal direction according to the set depth information, and
    wherein the depth information is a difference value from depth information corresponding to the $(n-1)^{th}$ layer.

**19.** The device of claim 12, wherein the generating unit is configured to compute moving information using the zero point and depth information for the original image and to generate the second image by moving the original image in a horizontal direction determined according to the moving information.

**20.** The device of claim 19, wherein a moving direction of the original image for generating the second image is different from a moving direction of the original image for generating the first image.

**21.** The device of claim 12, wherein, prior to receiving and setting the depth information and the zero point for the original image, the control unit is configured to determine whether the original image is a still image or a two-dimensional video, and, if the original image is a two-dimensional video, to classify the two-dimensional video into units of frames and store the classified frames successively as still images.

**22.** The device of claim 16, wherein, if the original image is not a first frame, the setting unit is configured to load three-dimensional information corresponding to an $(n-1)^{th}$ frame, to extract a modified area by comparing the $(n-1)^{th}$ frame with an $n^{th}$ frame, and to correct three-dimensional information corresponding to the $(n-1)^{th}$ frame in accordance with the modified area,

wherein the $n^{th}$ frame corresponds to a still image to be converted at a current visual point, and the $(n-1)^{th}$ frame corresponds to a still image converted at a previous visual point that is adjacent to the $n^{th}$ frame, n being a natural number.

**23.** A recording medium tangibly embodying a program of instructions executable by a digital processing apparatus to execute a method for converting a two-dimensional image to a three-dimensional image, the program being readable by the digital processing apparatus, the program executing:

receiving and setting overall depth information for an original image;
classifying the original image into partial objects and setting three-dimensional information for each of the partial objects;
generating a first image by moving the original image by use of the three-dimensional information;
receiving and setting a zero point for the original image;
generating a second image by moving the original image by use of the zero point; and
generating a three-dimensional image by combining the first image and the second image.

FIG. 1

Original image — 110

Left-eye image — 120

Right-eye image — 130

3D image — 140

FIG. 2

2D image

3D image

200

Image conversion device

2D video

3D video

FIG. 3

200

Image conversion device

310
Setting unit

330
Control unit

320
Generating unit

325
Combining unit

315
Storage unit

FIG. 4

```
┌─────────────────────────────────┐
│          Receive video          │─── 410
└─────────────────────────────────┘
                │
                ▼
┌─────────────────────────────────┐
│     Store classified frames as   │─── 415
│       successive still images    │
└─────────────────────────────────┘
                │
                ▼
┌─────────────────────────────────┐
│        Convert main image        │─── 420
└─────────────────────────────────┘
                │
      ┌─────────▼─────────────────┐
      │ ┌─────────────────────────────────┐
      │ │      Convert following image     │─── 425
      │ └─────────────────────────────────┘
      │                 │
      │                 ▼
  No  │          ◇───────────────◇
  └───│      Last image converted?        │─── 430
      ◇───────────────◇
                │
               Yes
                ▼
┌─────────────────────────────────┐
│        Compensate 3D image       │─── 435
└─────────────────────────────────┘
                │
                ▼
┌─────────────────────────────────┐
│   Generate 3D video using 3D image │─── 440
└─────────────────────────────────┘
                │
                ▼
┌─────────────────────────────────┐
│          Store 3D video          │─── 445
└─────────────────────────────────┘
```

FIG. 5

Generate overall depth information — 510

Set contour lines — 515

Generate first image using depth information and contour line — 520

Set zero point — 525

Compute moving information using zero point — 530

Generate second image using moving information and contour line — 535

Generate 3D image using first image and second image — 540

FIG. 6

FIG. 7

FIG. 8

FIG. 9

FIG. 10

Load 3D information of still image converted at previous visual point — 1010

↓

Extract modified area — 1015

↓

Corrects 3D information corresponding to modified area — 1020

↓

Generate first image using depth information and contour line — 1025

↓

Set zero point — 1030

↓

Compute moving information using zero point — 1035

↓

Generate second image using moving information and contour line — 1040

↓

Generate 3D image using first image and second image — 1045

FIG. 11

FIG. 12